# EUROPEAN PATENT SPECIFICATION

(11) **EP 3 506 673 B1**
(45) Date of publication and mention of the grant of the patent: **22.04.2020**
(21) Application number: 16917127.9
(22) Date of filing: 28.09.2016
(51) Int. Cl.: H04W 24/08

(54) **WIRELESS COMMUNICATION METHOD, TERMINAL DEVICE AND ACCESS NETWORK DEVICE**
DRAHTLOSKOMMUNIKATIONSVERFAHREN, ENDGERÄTEVORRICHTUNG UND ZUGANGSNETZWERKVORRICHTUNG
PROCÉDÉ DE COMMUNICATION SANS FIL, DISPOSITIF TERMINAL ET DISPOSITIF DE RÉSEAU D'ACCÈS

(43) Date of publication of application: 03.07.2019
(73) Proprietor: Huawei Technologies Co., Ltd., Longgang District Shenzhen, Guangdong 518129 (CN)
(72) Inventor: XU, Xiaoying, Shenzhen Guangdong 518129 (CN); ZHENG, Xiaoxiao, Shenzhen Guangdong 518129 (CN); HUANG, Min, Shenzhen Guangdong 518129 (CN)
(74) Representative: Maiwald Patent- und Rechtsanwaltsgesellschaft mbH
(86) International application number: PCT/CN2016/100573
(87) International publication number: WO 2018/058372

(56) References cited:
- WO-A1-2008/051061
- CN-A- 103 402 230
- CN-A- 103 974 317
- CN-A- 104 219 739
- US-A1- 2007 026 857
- US-A1- 2012 020 231
- US-A1- 2013 279 423
- US-A1- 2014 199 994
- US-A1- 2015 327 314

## Description

### TECHNICAL FIELD

Embodiments of this disclosure relate to the communications field, and more specifically, to wireless communication methods, a terminal device, and an access network device.

### BACKGROUND

A wireless mobile broadband network has features of wide coverage, fast deployment, and a short period of cost recovery. In areas in which it is not easy to deploy a wired network or deployment costs are high, a client terminal device is used. The client terminal device may be used as a broadband access point, which accesses the wireless mobile broadband network and communicates with a base station through air interfaces, and provides a broadband network access service for a wireless fidelity (Wireless Fidelity, "Wi-Fi" for short) terminal device and communicates with the Wi-Fi terminal device by using a Wi-Fi technology.

The Wi-Fi terminal device communicates with the base station by using the client terminal device over a communications link between the Wi-Fi terminal device and the client terminal device and a communications link between the client terminal device and the base station. The base station may schedule, based on performance of the link between the base station and the client terminal device, the client terminal device to transmit data.

US 2013/0279423 A1 describes a method for coordinating in-device coexistence interference in a wireless communication system. The method comprises: detecting the occurrence of in-device interference, transmitting information about in-device coexistence interference in a wireless communication system, coordinating in-device coexistence interference using frequency shift, frequency shaping, or frequency division multiplexing (FDM) technique.

US 2012/0020231 A1 describes various methods for wireless communication in a device with co-existed/co-located radios. Multiple communication radio transceivers are co-existed/co-located in a user equipment (UE) having in-device coexistence (IDC) capability, which may result in IDC interference. In a first method, the network identifies IDC capability by UE identification. In a second method, the UE intentionally performs cell selection or reselection to cells in non-ISM frequency bands. In a third method, the UE signals the existence of ISM band applications via capability negotiation. In a fourth method, the UE signals the activation of ISM band applications by signaling methods. Under the various methods, the UE and its serving eNB can apply FDM or TDM solutions to mitigate the IDC interference.

US 2014/0199994 A1 describes a method for providing measurements of WiFi network channels to a cellular radio network.

US 2008/051061 A1 describes a method of reporting channel quality information in a wireless communication system. A relay station measures an uplink signal of a mobile station to obtain a measurement result, and transmits a report message including the measurement result and the identification conformation of the mobile station to a base station.

US 2015/327312 A1 describes a method for providing a resource configuration adjustment or transmission mode adjustment mechanism. With the transmission mode adjustment mechanism, a D2D UE can decide a transmission mode according to a transmission condition when operating as a transmitting end. With the resource configuration adjustment and the transmission mode adjustment mechanism, when the D2D UE operates as a receiving end, the D2D UE can transmit a report message carrying a received signal quality to the base station so that the base station adjusts the D2D resource configuration or adjusts the transmission mode of the corresponding transmitting end according to the report message.

### SUMMARY

Embodiments of this disclosure provide wireless communication methods, a terminal device, and an access network device, so that the access network device can receive performance of a radio link between a client terminal device and at least one Wi-Fi terminal device.

According to a first aspect, a first terminal device obtains a performance parameter value of a radio link that exists when the first terminal device communicates with at least one second terminal device by using a radio link, where the first terminal device communicates with an access network device by using a wireless mobile network, and the at least one second terminal device communicates with the first terminal device by using a wireless fidelity technology, wherein the first terminal device provides a network access service for the at least one second terminal device; and the first terminal device reports the performance parameter value to the access network device, so that the access network device learns of transmission performance of the radio link.

Therefore, in this embodiment of this disclosure, the first terminal device obtains the performance parameter value that exists when the first terminal device communicates with the at least one second terminal device by using the radio link, and reports the performance parameter value of the radio link to the access network device, so that the access network device can learn of transmission performance of the radio link, and the access network device may schedule, at a high priority based on the performance of the radio link, a first terminal device whose radio link has desirable transmission performance, thereby improving user experience.

In an optional implementation, the performance parameter value includes a system performance parameter value that exists when the first terminal device communicates with a device system including the at least one second terminal device by using the radio link.

Optionally, the first terminal device may directly measure a system performance parameter that exists when the first terminal device communicates with the device system by using the radio link, to obtain the system performance parameter value.

Optionally, the first terminal device may receive the system performance parameter value sent by the device system.

In this case, the first terminal device reports the obtained system performance parameter value to the access network device, so that the access network device can learn of the transmission performance of the radio link, and when the transmission performance of the radio link is desirable, the access network device may schedule the first terminal device at a high priority.

In an optional implementation, the first terminal device may obtain the system performance parameter value based on the performance parameter value that corresponds to each second terminal device when the first terminal device communicates with the second terminal device in the at least one second terminal device by using the radio link.

Optionally, each second terminal device in the at least one second terminal device measures and/or collects statistics on a performance parameter corresponding to the second terminal device, and sends a result obtained after the measurement and/or statistical collection to the first terminal device, and the first terminal device may determine the system performance parameter value based on the received performance parameter value of the radio link corresponding to the second terminal device.

Optionally, the first terminal device may directly measure and/or collect statistics on the performance parameter corresponding to each second terminal device, and determine the system performance parameter value based on the performance parameter value that is obtained after the measurement and/or statistical collection and that corresponds to the second terminal device.

In an optional implementation, the performance parameter value includes a performance parameter value that corresponds to each second terminal device when the first terminal device communicates with the second terminal device in the at least one second terminal device by using the radio link.

Optionally, each second terminal device in the at least one second terminal device measures and/or collects statistics on the performance parameter corresponding to the second terminal device, and sends, to the first terminal device, the performance parameter value that is obtained after the measurement and/or statistical collection and that corresponds to the second terminal device.

Optionally, the first terminal device may directly measure and/or collect statistics on the performance parameter corresponding to each second terminal device, to obtain the performance parameter value corresponding to the second terminal device.

In this case, the first terminal device reports the obtained performance parameter value corresponding to each second terminal device in the at least one second terminal device to the access network device, so that the access network device can learn of the transmission performance that is when the first terminal device communicates with the second terminal device, and when in the at least one second terminal device, there is a second terminal device that has desirable performance during transmission with the first terminal device, the access network device can schedule, at a high priority, the first terminal device accessed by the second terminal device.

In an optional implementation, when the first terminal device reports the performance parameter value corresponding to each second terminal device to the access network device, the first terminal device may carry address information corresponding to the second terminal device.

Optionally, the address information includes at least one of an Internet Protocol address IP, a Medium Access Control address, and a port number.

In this case, the access network device may distinguish different second terminal devices by using address information, and can learn of performance parameter values of radio links corresponding to the different second terminal devices.

In an optional implementation, the reporting, by the first terminal device, the performance parameter value to the access network device includes: reporting, by the first terminal device to the access network device, identifier information of each second terminal device and the performance parameter value corresponding to the second terminal device.

Optionally, in a transmission process, bits needed by the identifier information may be less than bits needed by the address information. Therefore, transmission time and transmission resources can be reduced.

Optionally, the identifier information is used to indicate a logical channel or a radio network temporary identifier allocated by the access network device to each second terminal device.

Optionally, the identifier information may be used to indicate an IP flow, and the IP flow includes a source IP, a destination IP, a source port, and a destination port.

In an optional implementation, before the reporting, by the first terminal device to the access network device, identifier information of each second terminal device and the performance parameter value corresponding to the second terminal device, the method further includes: sending, by the first terminal device, address information of each second terminal device to the access network device; and receiving, by the first terminal device, the identifier information of each second terminal device that is sent by the access network device, where the identifier information of each second terminal device is identifier information that is allocated by the access network device to each second terminal device based on the address information of the second terminal device.

In an optional implementation, the reporting, by the first terminal device, the performance parameter value to the access network device includes: reporting, by the first terminal device, the performance parameter value to the access network device in a preset period.

In an optional implementation, the reporting, by the first terminal device, the performance parameter value to the access network device includes: reporting, by the first terminal device, the performance parameter value to the access network device when determining that the performance parameter value and a preset threshold satisfy a preset relationship.

In this case, only when the performance parameter value and the preset threshold satisfy the preset relationship, the first terminal device reports the performance parameter value of the radio link to the access network device, so that when the performance of the radio link changes, the first terminal device can report the performance of the radio link to the access network device in time, and the access network device can correspondingly adjust scheduling information. Therefore, a quantity of times of reporting to the access network device is reduced, and channel resources are saved.

In an optional implementation, the method further includes: receiving, by the first terminal device, a first indication message sent by the access network device, where the first indication message is used to indicate at least one of the following information: a to-be-measured performance parameter, a reporting manner, and the at least one second terminal device required for obtaining the performance parameter value.

In an optional implementation, the method further includes: sending, by the first terminal device, a second indication message to the access network device, where the second indication message is used to indicate that the first terminal device has a capability of providing a wireless fidelity network access service.

Optionally, the second indication message is used to indicate that the first terminal device has a capability of reporting the performance parameter value.

In an optional implementation, the performance parameter includes at least one of a throughput rate, a packet loss rate, a retransmission rate, channel utilization, a receive signal strength, a quantity of connected users, and a transmission queue length.

According to a second aspect, an embodiment of this disclosure provides a wireless communication method, including: receiving, by an access network device, a performance parameter value of a radio link that is reported by a first terminal device and that exists when the first terminal device communicates with at least one second terminal device by using the radio link, where the access network device communicates with the first terminal device by using a wireless mobile network, and the first terminal device communicates with the at least one second terminal device by using a wireless fidelity technology, wherein the first terminal device provides a network access service for the at least one second terminal device; and scheduling, by the access network device, the first terminal device based on the performance parameter value.

Therefore, in the embodiments of this disclosure, the first terminal device obtains the performance parameter value that exists when the first terminal device communicates with the at least one second terminal device by using the radio link, and reports the performance parameter value of the radio link to the access network device, so that the access network device can learn of transmission performance of the radio link, and the access network device may schedule, at a higher priority based on the performance of the radio link, a first terminal device whose radio link has desirable transmission performance, thereby improving user experience.

In an optional implementation, the performance parameter value includes a system performance parameter value that exists when the first terminal device communicates with a device system including the at least one second terminal device by using the radio link.

In an optional implementation, the performance parameter value includes a performance parameter value that corresponds to each second terminal device when the first terminal device communicates with the second terminal device in the at least one second terminal device by using the radio link.

In an optional implementation, the method further includes: receiving, by the access network device, address information of each second terminal device that is sent by the first terminal device, or obtaining, by the access network device, address information of each second terminal device by parsing a data packet sent by the first terminal device; allocating, by the access network device, identifier information to each second terminal device based on the address information of the second terminal device; and sending, by the access network device, the identifier information of the second terminal device to the first terminal device, where
the receiving, by an access network device, a performance parameter value that is reported by a first terminal device and that exists when the first terminal device communicates with at least one second terminal device by using a radio link includes: receiving, by the access network device, the identifier information of each second terminal device that is reported by the first terminal device, and the performance parameter value corresponding to the second terminal device.

In an optional implementation, the method further includes: sending, by the access network device, a first indication message to the first terminal device, where the first indication message is used to indicate at least one of the following information: a to-be-measured performance parameter, a reporting manner, and the at least one second terminal device required for obtaining the performance parameter value.

In an optional implementation, the method further includes: receiving, by the access network device, a second indication message sent by the first terminal device, where the second indication message is used to indicate that the first terminal device has a capability of providing a network access service.

In an optional implementation, the performance parameter includes at least one of a throughput rate, a packet loss rate, a retransmission rate, channel utilization, a receive signal strength, a quantity of connected users, and a transmission queue length.

According to a third aspect, an example of this disclosure provides a wireless communication method, including: obtaining, by a second terminal device, a performance parameter value that exists when the second terminal device communicates with a first terminal device; and sending, by the second terminal device, the performance parameter value to the first terminal device.

In an optional implementation, before the sending, by the second terminal device, the performance parameter value to the first terminal device, the method further includes: receiving, by the second terminal device, a request message sent by the first terminal device, where the request message is used to request the performance parameter value that is sent by the second terminal device to the first terminal device.

According to a fourth aspect, an embodiment of this disclosure provides a terminal device, configured to perform the method according to any one of the first aspect or the possible implementations of the first aspect. Specifically, the terminal device includes modular units configured to perform the method according to any one of the first aspect or the possible implementations of the first aspect.

According to a fifth aspect, an embodiment of this disclosure provides an access network device, configured to perform the method according to any one of the second aspect or the possible implementations of the second aspect. Specifically, the access network device includes modular units configured to perform the method according to any one of the second aspect or the possible implementations of the second aspect.

According to a sixth aspect, an example of this disclosure provides a terminal device, configured to perform the method according to any one of the third aspect or the possible implementations of the third aspect. Specifically, the terminal device includes modular units configured to perform the method according to any one of the third aspect or the possible implementations of the third aspect.

According to a seventh aspect, an example of this disclosure provides a terminal device, configured to perform the method according to any one of the first aspect or the possible implementations of the first aspect, and the terminal device includes a processor, a memory, a receiver, and a transmitter, where the memory is configured to store an instruction that schedules an uplink resource, and the processor is configured to execute the instruction stored in the memory, perform the following scheduling work when being driven by the instruction, and control the receiver to receive a signal and control the transmitter to send a signal;
the processor is configured to obtain a performance parameter value that exists when the terminal device communicates with at least one second terminal device by using a radio link, where the terminal device communicates with an access network device by using a wireless mobile network, and the at least one second terminal device communicates with the terminal device by using a wireless fidelity technology; and
the transmitter is configured to report the performance parameter value to the access network device, so that the access network device learns of transmission performance of the radio link.

According to an eighth aspect, an example of this disclosure provides a terminal device, configured to perform the method according to any one of the second aspect or the possible implementations of the second aspect, and the terminal device includes a processor, a memory, a receiver, and a transmitter, where the memory is configured to store an instruction that schedules an uplink resource, and the processor is configured to execute the instruction stored in the memory, perform the following scheduling work when being driven by the instruction, and control the receiver to receive a signal and control the transmitter to send a signal;
the receiver is configured to receive a performance parameter value that is reported by a first terminal device and that exists when the first terminal device communicates with at least one second terminal device by using a radio link, where the access network device communicates with the first terminal device by using a wireless mobile network, and the first terminal device communicates with the at least one second terminal device by using a wireless fidelity technology; and
the processor is configured to schedule the first terminal device based on the performance parameter value.

According to a ninth aspect, an example of this disclosure provides a terminal device, configured to perform the method according to any one of the third aspect or the possible implementations of the third aspect, and the terminal device includes a processor, a memory, a receiver, and a transmitter, where the memory is configured to store an instruction that schedules an uplink resource, and the processor is configured to execute the instruction stored in the memory, perform the following scheduling work when being driven by the instruction, and control the receiver to receive a signal and control the transmitter to send a signal;
the processor is configured to obtain a performance parameter value that exists when the terminal device communicates with a first terminal device; and
the transmitter is configured to send the performance parameter value to the first terminal device.

According to a tenth aspect, an example of this disclosure provides a computer readable medium, configured to store a computer program. The computer program includes instructions used to perform the method according to any one of the first aspect or the possible implementations of the first aspect, the method according to any one of the second aspect or the possible implementations of the second aspect, and the method according to any one of the third aspect or the possible implementations of the third aspect.

### BRIEF DESCRIPTION OF DRAWINGS

To describe the technical solutions in the embodiments of this disclosure more clearly, the following briefly describes the accompanying drawings required for describing the embodiments. Apparently, the accompanying drawings in the following description show merely some embodiments of this disclosure.
FIG. 1 is a schematic architectural diagram of an disclosure scenario according to an embodiment of this disclosure;
FIG. 2 is a schematic flowchart of a wireless communication method according to an embodiment of this disclosure;
FIG. 3 is a schematic flowchart of a wireless communication method according to an embodiment of this disclosure;
FIG. 4 is a schematic flowchart of a wireless communication method according to an embodiment of this disclosure;
FIG. 5 is a schematic block diagram of a terminal device according to an embodiment of this disclosure;
FIG. 6 is a schematic block diagram of an access network device according to an embodiment of this disclosure;
FIG. 7 is a schematic block diagram of a terminal device according to an embodiment of this disclosure;
FIG. 8 is a schematic structural diagram of a terminal device according to an embodiment of this disclosure;
FIG. 9 is a schematic structural diagram of an access network device according to an embodiment of this disclosure; and
FIG. 10 is a schematic structural diagram of a terminal device according to an embodiment of this disclosure.

### DESCRIPTION OF EMBODIMENTS

The following clearly describes the technical solutions in the embodiments of this disclosure with reference to the accompanying drawings in the embodiments of this disclosure. Apparently, the described embodiments are some but not all of the embodiments of this disclosure.

It should be understood that, the technical solutions of the embodiments of this disclosure may be applied to various communications systems, such as a Global System for Mobile Communications (Global System of Mobile Communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a Long Term Evolution (Long Term Evolution, "LTE" for short) system, an LTE frequency division duplex (Frequency Division Duplex, "FDD" for short) system, LTE time division duplex (Time Division Duplex, "TDD" for short), a Universal Mobile Telecommunications System (Universal Mobile Telecommunication System, "UMTS" for short), and a future fifth generation (5th-Generation, 5G for short) communications system.

This disclosure describes the embodiments with reference to a terminal device. The terminal device may also be referred to as user equipment (User Equipment, "UE" for short), an access terminal, a subscriber unit, a subscriber station, a mobile station, a mobile console, a remote station, a remote terminal, a mobile device, a user terminal, a terminal, a wireless communications device, a user agent, a user apparatus, or the like. The access terminal may be a cellular phone, a cordless phone, a Session Initiation Protocol (Session Initiation Protocol, "SIP" for short) phone, a wireless local loop (Wireless Local Loop, "WLL" for short) station, a personal digital assistant (Personal Digital Assistant, "PDA" for short), a handheld device having a wireless communication function, a computing device, another processing device connected to a wireless modem, an in-vehicle device, a wearable device, a terminal device in a future 5G network, a terminal device in a future evolved public land mobile network (Public Land Mobile Network, "PLMN" for short), or the like.

In the embodiments of this disclosure, a first terminal device is a terminal device that communicates with an access network device by using a wireless mobile network, a second terminal device is a terminal device that communicates with the first terminal device by using Wi-Fi, and the first terminal device may provide a network access service for the second terminal device.

This disclosure describes each embodiment with reference to the access network device. The access network device may be a device configured to communicate with the first terminal device, and may be, for example, a combination of a base transceiver station (Base Transceiver Station, "BTS" for short) in a GSM system or CDMA and a base station controller (Base Station Controller, "BSC"), or a NodeB (NodeB, "NB") in a WCDMA system or a radio network controller (Radio Network Controller, "RNC"), or may be an evolved NodeB (Evolutional NodeB, "eNB" or "eNodeB" for short) in an LTE system. Alternatively, the network device may be a relay station, an access point, an in-vehicle device, a wearable device, an access network device in a future 5G network such as a next-generation base station, an access network device in a future evolved PLMN network, or the like.

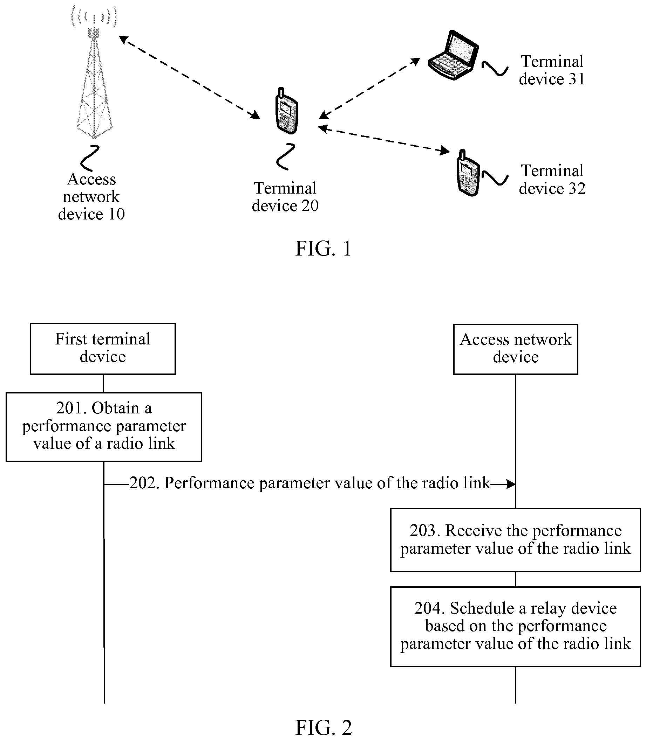

FIG. 1 is a schematic architectural diagram of an disclosure scenario 100 according to an embodiment of this disclosure. As shown in FIG. 1, a terminal device 20 may access a wireless mobile broadband network by using an access network device 10, and provide a broadband network access service for a terminal device 31 and a terminal device 32. The terminal device 20 may access a broadband network by using a third-generation mobile communication (3rd-generation, "3G") network, and provide a network access service for the terminal device 31 and the terminal device 32 by using a Wi-Fi communications network.

In a process of sending uplink data to the access network device 10, the terminal device 31 first encapsulates data, sets a source address to an address of the terminal device 31, and then sends an encapsulated data packet to the terminal device 20. After receiving the data packet, the terminal device 20 modifies the source address to an address of the terminal device 20, and sends the data packet to the access network device 10. When sending downlink data to the terminal device 32, the access network device 10 first encapsulates the data into a data packet whose destination address is the address of the terminal device 20, and after the terminal device 20 receives the data packet, modifies the destination address to an address of the terminal device 32, and sends the data packet to the terminal device 32.

It should be understood that, there are two links between the terminal device 20 shown in FIG. 1 and each of the terminal device 31 and the terminal device 32. However, in this embodiment, the terminal device 31 and the terminal device 32 may further communicate with the terminal device 20 by using a same link, for example, in a case of time division multiplexing.

FIG. 2 is a schematic flowchart of a wireless communication method 200 according to an embodiment of this disclosure. The method 200 may be applied to the scenario shown in FIG. 1, and certainly may also be applied to other communication scenarios. This is not particularly limited in this embodiment of this disclosure.

In 201, a first terminal device obtains a performance parameter value that exists when the first terminal device communicates with at least one second terminal device by using a radio link, where the first terminal device communicates with an access network device by using a wireless mobile network, and the at least one second terminal device communicates with the first terminal device by using a Wi-Fi technology.

In an implementation, the first terminal device may obtain a system performance parameter value that exists when the first terminal device communicates with a device system including the at least one second terminal device by using the radio link.

In this case, when the first terminal device obtains the performance parameter value of the radio link, the at least one second terminal device is not distinguished from each other. Instead, all second terminal devices in the at least one second terminal device are used as an entirety to communicate with the first terminal device. That is, the first terminal device communicates with the device system including the at least one second terminal device.

Optionally, the system performance parameter may include at least one of a system throughput rate, a system packet loss rate, a retransmission rate of a system, system channel utilization, a quantity of connected users in a system, a transmission queue of a system, and a receive signal strength. The system throughput rate, the system packet loss rate, and the retransmission rate of the system may include a system throughput rate, a system packet loss rate, a retransmission rate of a system corresponding to an uplink direction and/or a downlink direction of the radio link.

Optionally, the first terminal device may directly measure and/or collect statistics on a system performance parameter that exists when the first terminal device communicates with the device system by using the radio link, to obtain the system performance parameter value.

For example, the first terminal device may determine, based on second terminal devices that currently access a network by using the first terminal device, a quantity of second terminal devices included in the device system, and determine the quantity as the quantity of connected users in the system.

For another example, the first terminal device may determine a size of a remaining queue in a transmission queue that is currently used to temporarily store data sent by the device system to the access network device and data sent by the access network device to the device system, and use the remaining queue as a length value of the transmission queue of the system, or use a size of a currently used queue as a length value of the transmission queue of the system.

For another example, when the first terminal device and the device system transmit data to each other, the first terminal device may determine a ratio of a sum of data amounts sent or received by all users in the device system to a sum of time lengths of sending or receiving data by all the users as the system throughput rate.

For another example, when the first terminal device and the device system transmit data to each other, the first terminal device may determine a ratio of a sum of quantities of lost data packets sent or received by all users in the device system in a period of time to a sum of quantities of data packets sent or received by all the users as the system packet loss rate.

Optionally, the first terminal device may receive the system performance parameter value that is sent by the device system and that exists when the first terminal device communicates with the device system by using the radio link.

For example, the at least one second terminal device in the device system may determine channel utilization in a channel contention process, and the first terminal device may receive the channel utilization sent by the device system.

Optionally, the first terminal device may obtain the system performance parameter value based on the performance parameter value that corresponds to each second terminal device when the first terminal device communicates with the second terminal device in the at least one second terminal device by using the radio link.

Optionally, each second terminal device in the at least one second terminal device measures and/or collects statistics on the performance parameter corresponding to the second terminal device, and sends a result obtained after the measurement and/or statistical collection to the first terminal device, and the first terminal device may determine the system performance parameter value based on the received performance parameter value of the radio link corresponding to the second terminal device.

For example, the first terminal device communicates with a device system including a second terminal device 1, a second terminal device 2, and a second terminal device 3. The three second terminal devices collect statistics of throughput rates, respectively, 30 bytes/second, 45 bytes/second, and 27 bytes/second, and send the results to the first terminal device. The first terminal device may average the three throughput rates, where an obtained average value is 34 bytes/second, and the first terminal device may use the averaged result as the system throughput rate.

For another example, the first terminal device receives an uplink receive signal strength sent by each second terminal device in a device system, and the device system includes a second terminal device 1 and a second terminal device 2. The uplink receive signal strength is a receive signal strength when the second terminal device receives data sent by the first terminal device. Statistics of uplink receive signal strengths collected by the two second terminal devices are respectively 65 dBm and 43 dBm. The first terminal device may average the results to obtain an average value of 54 dBm, and the first terminal device may use the averaged result as an uplink receive signal strength of the system.

For another example, the first terminal device receives a packet loss rate sent by each second terminal device in a device system, and the device system includes a second terminal device 1, a second terminal device 2, and a second terminal device 3. The packet loss rates of the three second terminal devices are 0%, 6%, and 12% respectively. The first terminal device may perform weighted averaging on the three packet loss rates, and a weighted value may be 1/2, 1/6, or 1/3. The weighted value may be determined based on a priority of the second terminal device, and if the weighted average value is 5%, the first terminal device may use the averaged result as the system packet loss rate.

Optionally, the first terminal device may directly measure and/or collect statistics on the performance parameter corresponding to each second terminal device, and determine the system performance parameter value based on the performance parameter value that is obtained after the measurement and/or statistical collection and that corresponds to the second terminal device.

For example, the first terminal device collects statistics on downlink receive signal strengths when the first terminal device receives data sent by second terminal devices in a device system, and the device system includes a second terminal device 1, a second terminal device 2, and a second terminal device 3. Statistical collection results of the downlink receive signal strengths are 75 dBm, 80 dBm, and 55 dBm respectively. The first terminal device may average the statistical collection results to obtain an average value of 70 dBm, and the first terminal device may use the averaged result as a downlink receive signal strength of the system.

For another example, the first terminal device collects statistics on throughput rates that are when second terminal devices in a device system transmit data, and the device system includes a second terminal device 1 and a second terminal device 2. Statistical collection results of the system throughput rates are 35 bytes/second and 65 bytes/second respectively. The first terminal device may average the statistical collection results to obtain an average value of 50 bytes/second, and the first terminal device may use the averaged result as the system throughput rate.

It should be understood that, this embodiment of this disclosure describes only an example in which the system performance parameter value is obtained through averaging or weighted averaging, but this embodiment of this disclosure is not limited thereto, and the system performance parameter value may further be obtained in other manners.

Optionally, when a plurality of second terminal devices access the first terminal device by using Wi-Fi, the first terminal device may determine at least one second terminal device in the plurality of second terminal devices, use the at least one second terminal device as a device system, and obtain a system performance parameter value that exists when the first terminal device communicates with the device system by using a radio link.

For example, a second terminal device 1, a second terminal device 2, a second terminal device 3, and a second terminal device 4 access a network by using the first terminal device. The first terminal device may select three second terminal devices of highest priorities as a device system, and obtain a system performance parameter value that exists when the first terminal device communicates with the device system by using a radio link.

In another implementation, the first terminal device may obtain a performance parameter value that corresponds to each second terminal device when the first terminal device communicates with the second terminal device in the at least one second terminal device by using the radio link.

In this case, when obtaining the performance parameter value of the radio link, the first terminal device needs to distinguish the at least one second terminal device, that is, the first terminal device obtains the performance parameter value corresponding to each second terminal device at a granularity of the second terminal device.

Optionally, the performance parameter corresponding to each second terminal device may include at least one of a throughput rate, a packet loss rate, a retransmission rate, channel utilization, and a receive signal strength.

Optionally, each second terminal device in the at least one second terminal device measures and/or collects statistics on the performance parameter corresponding to the second terminal device, and sends, to the first terminal device, the performance parameter value that is obtained after the measurement and/or statistical collection and that corresponds to the second terminal device.

Optionally, the first terminal device may directly measure and/or collect statistics on the performance parameter corresponding to each second terminal device, to obtain the performance parameter value corresponding to the second terminal device.

Optionally, the first terminal device provides a network access service for all second terminal devices in a second terminal device set. The access network device determines the at least one second terminal device in the second terminal device set, and the at least one second terminal device is required for obtaining the performance parameter value. The access network device sends, to the first terminal device, a message used to indicate the at least one second terminal device that is in the second terminal device set and that is required for obtaining the performance parameter value.

For example, the second terminal device set includes a second terminal device 1, a second terminal device 2, a second terminal device 3, and a second terminal device 4. The access network device selects the second terminal device 1 and the second terminal device 2 from the second terminal device set, and notifies the first terminal device that second terminal devices required for obtaining the performance parameter value are the second terminal device 1 and the second terminal device 2.

Optionally, the access network device may receive a message that is sent by the first terminal device and that is used to indicate the second terminal device set, to learn of the second terminal device set, and determine the at least one second terminal device in the second terminal device set.

Optionally, the access network device may learn of the second terminal device set by parsing a data packet sent by the first terminal device, and determine the at least one second terminal device in the second terminal device set.

It should be understood that, in this embodiment of this disclosure, performance parameters that need to be measured by each second terminal device may be different. For example, the second terminal device 1 needs to measure a throughput rate and a packet loss rate, and the second terminal device 2 needs to measure a throughput rate.

It should be further understood that, in this embodiment of this disclosure, the first terminal device may obtain the system performance parameter value that exists when the first terminal device communicates with the device system including the at least one second terminal device by using the radio link, and obtain the performance parameter value corresponding to each second terminal device.

In 202, the first terminal device reports the performance parameter value to the access network device.

Optionally, in this embodiment of this disclosure, when the first terminal device reports, to the access network device, the system performance parameter value that exists when the first terminal device communicates with the device system including the at least one second terminal device by using the radio link.

Optionally, in this embodiment of this disclosure, the first terminal device reports the performance parameter value corresponding to each second terminal device to the access network device.

Optionally, the access network device may determine the system performance parameter value based on the received performance parameter value corresponding to each second terminal device.

Optionally, in this embodiment of this disclosure, when the first terminal device reports the performance parameter value corresponding to each second terminal device to the access network device, the first terminal device may carry address information corresponding to the second terminal device.

Optionally, the address information includes at least one of an Internet Protocol (Internet Protocol, "IP" for short) address, a Media Access Control (Media Access Control, "MAC") address, and a port number.

For example, when the first terminal device reports a performance parameter value corresponding to the second terminal device 1 to the access network device, the first terminal device may arrange a corresponding port number of the second terminal device 1 behind the performance parameter value, and send the port number and the performance parameter value to the access network device. For all second terminal devices, same processing is performed. In this case, the access network device may distinguish different second terminal devices by using port numbers, and can learn of performance parameter values corresponding to the different second terminal devices.

Optionally, in this embodiment of this disclosure, when the first terminal device reports the performance parameter value corresponding to each second terminal device to the access network device, the first terminal device may carry identifier information corresponding to the second terminal device.

For example, when the first terminal device reports a throughput rate 1 and a throughput rate 2 corresponding to the second terminal device 1 and the second terminal device 2 to the access network device, the first terminal device may arrange an identifier 1 of the second terminal device 1 and an identifier 2 of the second terminal device 2 in a sequence of the system throughput rate 1, the identifier 1, the system throughput rate 2, and the identifier 2, and report the system throughput rates in the sequence of the identifiers to the access network device, so that the access network device may obtain the performance parameter value corresponding to each second terminal device.

Optionally, in a transmission process, bits (bit) needed by the identifier information may be less than bits needed by the address information.

For example, when the address information is an IP address, 32 bits or 128 bits may be needed. However, the identifier information may occupy only eight bits.

In an implementation, the first terminal device may send the address information of each second terminal device to the access network device. The access network device may allocate the identifier information to the second terminal device based on the address information of the second terminal device, and send the identifier information of the second terminal device to the first terminal device.

For example, the first terminal device sends port numbers 580, 290, and 385 corresponding to the second terminal device 1, the second terminal device 2, and the second terminal device 3 respectively to the access network device. Identifier information allocated by the access network device to the three second terminal devices is respectively 1, 2, and 3. The access network device may send the port numbers of the second terminal devices and the corresponding identifier information to the first terminal device, and may indicate the address information of each second terminal device and the corresponding identifier information in a form similar to {(580, 1), (290, 2), (385, 3)}.

Optionally, the identifier information allocated by the access network device to each second terminal device may be used to indicate a logical channel corresponding to the second terminal device. When transmitting data to the access network device, the first terminal device transmits data of each second terminal device by using the logical channel allocated by the access network device to the second terminal device.

Optionally, the identifier information allocated by the access network device to each second terminal device may be a radio network temporary identifier.

Optionally, the address information includes a source IP, a destination IP, a source port, and a destination port of an IP flow, and the identifier information allocated to the terminal device may be used to indicate different IP flows transmitted by each second terminal device. In this case, when the first terminal device reports the performance parameter value corresponding to each second terminal device, the performance parameter value may be performance parameter values corresponding to different IP flows.

Optionally, the access network device may further obtain the address information of each second terminal device by parsing a data packet sent by the first terminal device.

In another implementation, the first terminal device may set the identifier information for each second terminal device.

For example, IP addresses of the second terminal device 1, the second terminal device 2, and the second terminal device 3 are respectively 123.4.19.1, 123.4.19.2, and 123.4.19.3. The first terminal device sets identifier information of the second terminal device 1, the second terminal device 2, and the second terminal device 3 to 1,2, and 3, and may store a correspondence between the address information and the identifier information of each second terminal device.

Optionally, in this embodiment of this disclosure, the first terminal device may report the performance parameter value of the radio link to the access network device in a particular reporting manner.

In an implementation, the first terminal device may report the obtained performance parameter value to the access network device in a preset period.

For example, the first terminal device reports the obtained performance parameter value to the access network device at a period of five minutes.

Optionally, the access network device may send, to the first terminal device, a message including the preset period. The message is used to indicate that the first terminal device may report the performance parameter value of the radio link to the access network device at the preset period.

Optionally, the first terminal device may report, to the access network device at the preset period, the performance parameter value obtained within the preset period.

Optionally, a period at which the first terminal device performs reporting and a period at which the first terminal device obtains the performance parameter value may be different.

In another implementation, when determining that the performance parameter value and a preset threshold satisfy a preset relationship, the first terminal device may report, to the access network device, the performance parameter value obtained after the measurement and/or statistical collection.

Optionally, when determining that the preset threshold and the system performance parameter value that exists when the first terminal device communicates with the device system including the at least one second terminal device by using the radio link satisfy a preset relationship, the first terminal device may report the system performance parameter value to the access network device.

For example, the first terminal device needs to obtain a system throughput rate when the first terminal device performs data transmission with a device system including at least one second terminal device by using the radio link. When the system throughput rate is greater than a preset threshold, the first terminal device reports the system throughput rate to the access network device; or when the system throughput rate is less than the preset threshold, restarts to collect statistics on the system throughput rate.

Optionally, when determining that the preset threshold and the performance parameter value that corresponds to each second terminal device in the at least one second terminal device satisfy the preset relationship, the first terminal device may report, to the access network device, the performance parameter value corresponding to the second terminal device in the at least one second terminal device.

For example, the first terminal device needs to obtain packet loss rates corresponding to the second terminal device 1 and the second terminal device 2 respectively. When the packet loss rate corresponding to the second terminal device 1 is greater than the preset threshold, the first terminal device reports the packet loss rate corresponding to the second terminal device 1 to the access network device; or when the packet loss rate corresponding to the second terminal device 1 is less than a preset threshold, restarts to collect statistics on the packet loss rate corresponding to the second terminal device 1.

Optionally, when the first terminal device determines that the performance parameter value, the preset threshold, and preset time length satisfy preset relationships, the first terminal device may report, to the access network device, the performance parameter value previously obtained after the measurement and/or statistical collection.

For example, the first terminal device needs to learn of a throughput rate of a radio link corresponding to the second terminal device 1. When the system throughput rate corresponding to the second terminal device 1 is greater than the preset threshold for the preset time length, the first terminal device reports the system throughput rate corresponding to the second terminal device 1 to the access network device; or when the system throughput rate corresponding to the second terminal device 1 is less than the preset threshold for the preset time length, restarts to collect statistics on the system throughput rate corresponding to the second terminal device 1.

Optionally, when the first terminal device determines that the performance parameter value of the radio link, the preset threshold, and a hysteresis value satisfy preset relationships, the first terminal device may report, to the access network device, the performance parameter value previously obtained after the measurement and/or statistical collection.

For example, the first terminal device needs to obtain a system throughput rate when the first terminal device performs data transmission with a device system including at least one second terminal device by using the radio link. Assuming that the hysteresis value is a positive number, and when the system throughput rate is greater than a sum of the preset threshold and the hysteresis value, the first terminal device reports the obtained system throughput rate to the access network device, or when the system throughput rate is less than a difference between the preset threshold and the hysteresis value, restarts to collect statistics on the system throughput rate.

Optionally, there may be more than one preset threshold.

For example, the first terminal device needs to obtain a retransmission rate of a system when the first terminal device performs data transmission with a device system including at least one second terminal device by using the radio link. When the retransmission rate of the system is greater than a first threshold or less than a second threshold, the first terminal device reports the retransmission rate of the system to the access network device; or when the retransmission rate of the system is less than or equal to the first threshold and greater than or equal to the second threshold and the preset threshold, restarts to collect statistics on the retransmission rate of the system.

Optionally, the access network device may send, to the first terminal device, a message including a preset threshold and a preset relationship. The message is used to indicate that the first terminal device may report the performance parameter value to the access network device when the performance parameter value and the preset threshold satisfy the preset relationship.

In another implementation, when the first terminal device determines that the performance parameter value and the preset threshold satisfy the preset relationship, the first terminal device may report the obtained performance parameter value to the access network device, and subsequently the first terminal device may report the obtained performance parameter value to the access network device at the preset period.

Optionally, the access network device may send, to the first terminal device, a message including a preset threshold, a preset relationship, and a preset period. The message is used to indicate that the first terminal device may report the performance parameter value to the access network device, and may report the performance parameter value to the access network device at the preset period, when the performance parameter value and the preset threshold satisfy the preset relationship.

Optionally, the first terminal device may determine at least one second terminal device in a to-be-selected set of second terminal devices that can be reported, and send a performance parameter value corresponding to each second terminal device to the access network device.

For example, the first terminal device obtains throughput rates corresponding to the second terminal device 1, the second terminal device 2, and the second terminal device 3. Values of the system throughput rates corresponding to the second terminal device 1 and the second terminal device 2 are relatively large, and in a case of periodic reporting, the first terminal device determines to report the system throughput rates corresponding to the second terminal device 1 and the second terminal device 2 to the access network device.

For another example, the first terminal device determines that packet loss rates corresponding to the second terminal device 1, the second terminal device 2, and the second terminal device 3 are all less than a preset threshold, and the first terminal device may report the packet loss rates to the access network device. The first terminal device selects, from the packet loss rates, packet loss rates corresponding to the second terminal device 2 and the second terminal device 3 that have high priorities, and reports the packet loss rates to the access network device.

It should be understood that, alternatively, the first terminal device may randomly select at least one second terminal device from the to-be-selected set of second terminal devices.

Optionally, in this embodiment of this disclosure, the first terminal device may send a message to the access network device. The message is used to indicate that the first terminal device has a capability of providing a Wi-Fi network access service, and/or a capability of reporting, to the access network device, the performance parameter value that exists when the first terminal device communicates with the at least one second terminal device by using the radio link.

Optionally, in this embodiment of this disclosure, before the first terminal device obtains the performance parameter value that exists when the first terminal device communicates with the at least one second terminal device by using the radio link, the access network device may send indication information to the first terminal device. The indication information includes at least one of the following information: a to-be-measured performance parameter, a reporting manner, and the at least one second terminal device required for obtaining the performance parameter value.

For example, the access network device sends indication information to the first terminal device. The indication information is used to: indicate that the first terminal device needs to report the second terminal device 1, the second terminal device 2, and the second terminal device 3, indicate that the first terminal device needs to report a throughput rate, a retransmission rate, and a packet loss rate of each second terminal device in the three second terminal devices, and instruct the first terminal device to periodically report the system throughput rate, the retransmission rate, and the packet loss rate of each second terminal device to the access network device.

It should be understood that, in this embodiment of this disclosure, preset conditions that the performance parameter value of each second terminal device needs to satisfy may be different. For example, the performance parameter value corresponding to the second terminal device 1 may be periodically reported to the access network device, the performance parameter value corresponding to the second terminal device 2 is reported to the access network device when the performance parameter value is greater than a first preset threshold, and the performance parameter value corresponding to the second terminal device 3 is reported to the access network device when the performance parameter value is greater than a second preset threshold.

In 203, an access network device receives a performance parameter value that is reported by a first terminal device and that exists when the first terminal device communicates with at least one second terminal device by using a radio link.

In 204, the access network device schedules the first terminal device based on the performance parameter value.

Optionally, the access network device schedules a first terminal device of desirable performance at a high priority based on the system performance parameter value that exists when the first terminal device communicates with the device system including the at least one second terminal device by using the radio link.

For example, the access network device is connected to a first terminal device 1 and a first terminal device 2. A system throughput rate of the first terminal device is 68 bytes/second and a system throughput rate of the first terminal device 2 is 45 bytes/second, and then the access network device schedules the first terminal device 1 at a high priority.

Optionally, the access network device schedules a first terminal device accessed by a second terminal device of desirable performance, at a high priority based on the performance parameter value corresponding to each second terminal device.

Optionally, the access network device schedules the first terminal device based on the performance parameter value that exists when the first terminal device communicates with the at least one second terminal device by using the radio link, and the performance parameter value that exists when the access network device communicates with the first terminal device.

When the second terminal device communicates with the access network device, a link between the second terminal device and the first terminal device and a link between the first terminal device and the access network device need to be passed through, and when the access network device schedules the first terminal device, only performance that is when the first terminal device communicates with the access network device is considered. When performance of transmission between the first terminal device and the access network device is desirable, and performance of transmission between the second terminal device and the first terminal device is poor, a data packet sent by the access network device to the second terminal device may be lost when passing through the first terminal device, affecting user experience.

Therefore, in this embodiment of this disclosure, the first terminal device obtains the performance parameter value that exists when the first terminal device communicates with the at least one second terminal device by using the radio link, and reports the performance parameter value of the radio link to the access network device, so that the access network device can learn of transmission performance of the radio link, and the access network device may schedule, at a high priority based on performance of the radio link, a first terminal device whose radio link has desirable transmission performance, thereby improving user experience.

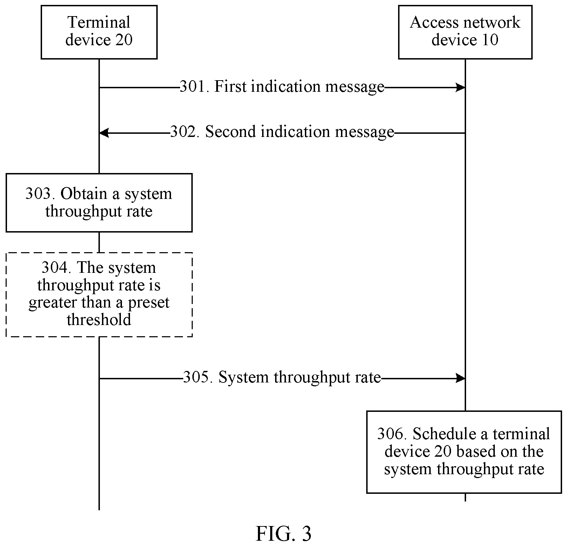

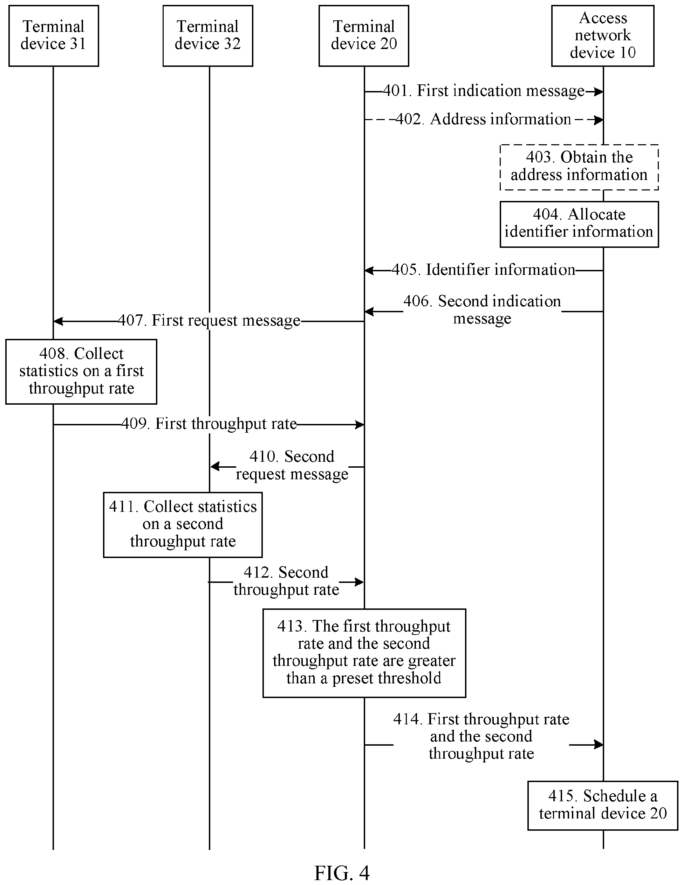

For a clearer understanding of this disclosure, a wireless communication method in the embodiments of this disclosure is described with reference to the method 300 shown in FIG. 3 and the method 400 shown in FIG. 4 by using the scenario shown in FIG. 1 as an example.

FIG. 3 is a schematic flowchart of a wireless communication method 300 according to an embodiment of this disclosure. In this method, obtaining a throughput rate is used as an example for description, and a terminal device 31 and a terminal device 32 form a device system.

In 301, a terminal device 20 sends a first indication message to an access network device 10, where the first indication message is used to indicate that the terminal device 20 has a capability of providing a network access service, or a capability of reporting a performance parameter value.

In 302, the access network device 10 sends a second indication message to the terminal device 20, where the second indication message is used to indicate that the terminal device 20 needs to obtain a system throughput rate of the device system.

Optionally, the second indication message may further be used to indicate a reporting manner of reporting, by the terminal device 20, the system throughput rate of the device system to the access network device 10.

Optionally, the reporting manner includes periodic reporting or reporting performed when the system throughput rate is greater than a preset threshold.

In 303, the terminal device 20 obtains the system throughput rate that is when the terminal device 20 performs data transmission with the device system.

Optionally, in 304, when the reporting manner is reporting performed when the system throughput rate is greater than the preset threshold, the terminal device 20 determines that the system throughput rate is greater than the preset threshold.

In 305, the terminal device 20 sends the obtained system throughput rate to the access network device 10.

In 306, the access network device 10 schedules the terminal device 20 based on the system throughput rate.

It should be understood that sequence numbers of the foregoing processes do not mean execution sequences in various embodiments of this disclosure. The execution sequences of the processes should be determined according to functions and internal logic of the processes, and should not be construed as any limitation on the implementation processes of the embodiments of this disclosure.

It should further be understood that, for implementations of the steps of the method 300 in this embodiment of this disclosure shown in FIG. 3, refer to specific description of the method 200 in the embodiment of this disclosure in FIG. 2. For brevity, details are not described herein again.

In this embodiment of this disclosure, the terminal device 20 reports, to the access network device 10, the performance parameter value obtained when the terminal device 20 communicates with the device system including the terminal device 31 and the terminal device 32 by using the radio link, so that the access network device 10 can learn of transmission performance of the radio link, and when the radio link has desirable transmission performance, the access network device 10 may schedule the terminal device 20 at a high priority.

FIG. 4 is a schematic flowchart of a wireless communication method 400 according to an embodiment of this disclosure. The method is described by using an example in which each terminal device needs to collect statistics on a throughput rate.

In 401, a terminal device 20 sends a first indication message to an access network device 10, where the first indication message is used to indicate that the terminal device 20 has a capability of providing a network access service, or a capability of reporting a performance parameter value.

Optionally, in 402, the terminal device 20 sends address information 1 of a terminal device 31 and address information 2 of a terminal device 32 to the access network device 10.

Optionally, in 403, the access network device 10 obtains the address information 1 of the terminal device 31 and the address information 2 of the terminal device 32 by parsing a data packet sent by the terminal device 20.

In 404, the access network device 10 allocates an identifier 1 to the terminal device 31 corresponding to the address information 1, and allocates an identifier 2 to the terminal device 32 corresponding to the address information 2.

Optionally, identifier information may be used to indicate a logical channel that is allocated by the access network device to each terminal device.

In 405, the access network device 10 sends the allocated identifier 1 and identifier 2 to the terminal device 20.

In 406, the access network device 10 sends a second indication message to the terminal device 20, where the second indication message is used to indicate that the terminal device 31 corresponding to the identifier 1 and the terminal device 32 corresponding to the identifier 2 need to collect statistics on a throughput rate.

Optionally, the second indication message may further be used to instruct the terminal device 20 to report a throughput rate corresponding to the terminal device 31 to the access network device 10, and indicate a reporting manner of the system throughput rate corresponding to the terminal device 3.

Optionally, the reporting manner includes periodic reporting or reporting performed when the system throughput rate is greater than a preset threshold.

Optionally, the second indication message may further include a list of terminal devices. The list may include identifier information of a terminal device that needs to obtain a throughput rate. The list includes the identifier 1 and the identifier 2, which may indicate that the terminal device 20 needs to obtain the system throughput rates corresponding to the terminal device 31 and the terminal device 32.

Optionally, in 407, the terminal device 20 sends a first request message to the terminal device 31, to request the terminal device 31 to report the system throughput rate corresponding to the terminal device 31. In 408, the terminal device 31 collects statistics on the system throughput rate corresponding to the terminal device 31, to obtain a first throughput rate. In 409, the terminal device 31 sends the first throughput rate to the terminal device 20.

Optionally, in 410, the terminal device 20 sends a second request message to the terminal device 32, to request the terminal device 32 to report the system throughput rate corresponding to the terminal device 32. In 411, the terminal device 32 collects statistics on the system throughput rate corresponding to the terminal device 32, to obtain a second throughput rate. In 412, the terminal device 32 sends the second throughput rate to the terminal device 20.

Optionally, in 413, when the reporting manner is reporting performed when a throughput rate is greater than a preset threshold, the first terminal device 20 determines that the first throughput rate and the second throughput rate are throughput rates greater than the preset threshold.

In 414, the terminal device 20 sends the first throughput rate and the corresponding identifier 1, and the second throughput rate and the corresponding identifier 2 to the access network device 10.

In 415, the access network device 10 schedules the first terminal device 20 based on the received throughput rates.

It should be understood that sequence numbers of the foregoing processes do not mean execution sequences in various embodiments of this disclosure. The execution sequences of the processes should be determined according to functions and internal logic of the processes, and should not be construed as any limitation on the implementation processes of the embodiments of this disclosure. For example, 407 and 410 may be performed first, 408, 409, 411, and 412 may be performed later, and 408 and 411 may be simultaneously performed.

It should be further understood that, for implementations of the steps of the method 400 in this embodiment of this disclosure shown in FIG. 4, refer to specific description of the method 200 in the embodiment of this disclosure in FIG. 2. For brevity, details are not described herein again.

In this embodiment of this disclosure, the terminal device 20 reports the obtained performance parameter values respectively corresponding to the terminal device 31 and the terminal device 32 to the access network device 10, so that based on the performance parameter values respectively corresponding to the terminal device 31 and the terminal device 32, the access network device 10 can learn of transmission performance of the terminal device 20 that is when the terminal device 20 communicates with the terminal device 31 and the terminal device 32, and when transmission performance of a link between the terminal device 20 and the terminal device 31 is desirable, the access network device may schedule, at a high priority, the terminal device 20 accessed by the terminal device 31.

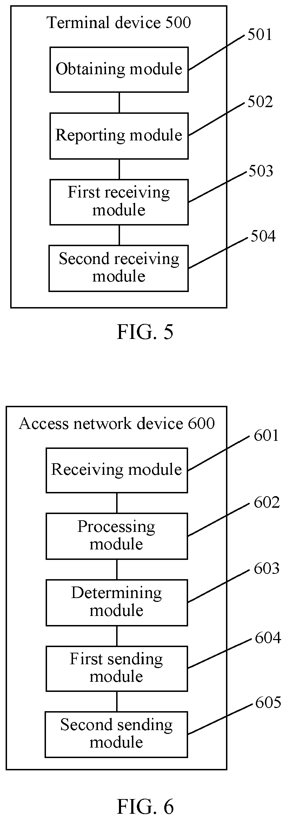

The communication method according to the embodiments of this disclosure is described in detail above with reference to FIG. 2 to FIG. 4, and a terminal device and an access network device according to the embodiments of this disclosure are described in detail below with reference to FIG. 5 to FIG. 10.

FIG. 5 is a schematic block diagram of a terminal device 500 according to an embodiment of this disclosure. As shown in FIG. 5, the terminal device 500 includes:
an obtaining module 501, configured to obtain a performance parameter value that exists when the terminal device 500 communicates with at least one second terminal device by using a radio link, where
the terminal device 500 communicates with an access network device by using a wireless mobile network, and the at least one second terminal device communicates with the terminal device 500 by using a wireless fidelity technology; and
a reporting module 502, configured to report the performance parameter value to the access network device, so that the access network device learns of transmission performance of the radio link.

Therefore, in this embodiment of this disclosure, the first terminal device obtains the performance parameter value that exists when the first terminal device communicates with the at least one second terminal device by using the radio link, and reports the performance parameter value of the radio link to the access network device, so that the access network device can learn of transmission performance of the radio link, and the access network device may schedule, at a high priority based on the performance of the radio link, a first terminal device whose radio link has desirable transmission performance, thereby improving user experience.

Optionally, the performance parameter value includes a system performance parameter value that exists when the terminal device 500 communicates with a device system including the at least one second terminal device by using the radio link.

Optionally, the performance parameter value includes a performance parameter value that corresponds to each second terminal device when the terminal device 500 communicates with the second terminal device in the at least one second terminal device by using the radio link.

Optionally, in this embodiment of this disclosure, the reporting module 502 is specifically configured to report, to the access network device, identifier information of each second terminal device and the performance parameter value corresponding to the second terminal device.

Optionally, in this embodiment of this disclosure, the reporting module 502 is further configured to send address information of each second terminal device to the access network device.

The terminal device 500 further includes a first receiving module 503, configured to receive the identifier information of each second terminal device that is sent by the access network device, where the identifier information of each second terminal device is identifier information that is allocated by the access network device to each second terminal device based on the address information of the second terminal device.

Optionally, in this embodiment of this disclosure, the reporting module 502 is specifically configured to report the performance parameter value to the access network device in a preset period.

Optionally, in this embodiment of this disclosure, the reporting module 502 is specifically configured to report the performance parameter value to the access network device when determining that the performance parameter value and a preset threshold satisfy a preset relationship.

The terminal device 500 further includes a second receiving module 504, configured to receive a first indication message sent by the access network device, where the first indication message is used to indicate at least one of the following information: a to-be-measured performance parameter, a reporting manner, and the at least one second terminal device required for obtaining the performance parameter value.

Optionally, in this embodiment of this disclosure, the reporting module 502 is further configured to send a second indication message to the access network device, where the second indication message is used to indicate that the terminal device 500 has a capability of providing a wireless fidelity network access service.

Optionally, in this embodiment of this disclosure, the performance parameter includes at least one of a throughput rate, a packet loss rate, a retransmission rate, channel utilization, and a receive signal strength.

It should be understood that, the terminal device 500 in this embodiment of this disclosure may correspond to the first terminal device in the embodiments of this disclosure, and the foregoing and other operations and/or functions of modules in the terminal device 500 are intended to implement corresponding procedures of the foregoing methods shown in FIG. 2 to FIG. 4. For brevity, details are not described herein again.

FIG. 6 is a schematic block diagram of an access network device 600 according to an embodiment of this disclosure. As shown in FIG. 6, the access network device 600 includes:
a receiving module 601, configured to receive a performance parameter value that is reported by a first terminal device and that exists when the first terminal device communicates with at least one second terminal device by using a radio link, where
the access network device 600 communicates with the first terminal device by using a wireless mobile network, and the first terminal device communicates with the at least one second terminal device by using a wireless fidelity technology; and
a processing module 602, configured to schedule the first terminal device based on the performance parameter value.

Optionally, the performance parameter value includes a system performance parameter value that exists when the first terminal device communicates with a device system including the at least one second terminal device by using the radio link.

Optionally, the performance parameter value includes a performance parameter value that corresponds to each second terminal device when the first terminal device communicates with the second terminal device in the at least one second terminal device by using the radio link.

Optionally, in this embodiment of this disclosure, the receiving module 601 is further configured to receive address information of each second terminal device that is sent by the first terminal device, or obtain address information of each second terminal device by parsing a data packet sent by the first terminal device; and
the access network device 600 further includes a determining module 603, configured to allocate identifier information to each second terminal device based on the address information of the second terminal device; and
a first sending module 604, configured to send the identifier information of the second terminal device to the first terminal device, where
the receiving module 601 is further configured to receive the identifier information of each second terminal device that is reported by the first terminal device, and the performance parameter value corresponding to the second terminal device.

Optionally, in this embodiment of this disclosure, the access network device 600 further includes a second sending module 605, configured to send a first indication message to the first terminal device, where the first indication message is used to indicate at least one of the following information: a to-be-measured performance parameter, a reporting manner, and the at least one second terminal device required for obtaining the performance parameter value.

Optionally, in this embodiment of this disclosure, the receiving module 601 is further configured to receive a second indication message sent by the first terminal device, where the second indication message is used to indicate that the first terminal device has a capability of providing a wireless fidelity network access service.

Optionally, in this embodiment of this disclosure, the performance parameter includes at least one of a throughput rate, a packet loss rate, a retransmission rate, channel utilization, and a receive signal strength.

It should be understood that, the access network device 600 in this embodiment of this disclosure may correspond to the access network device in the embodiments of this disclosure, and the foregoing and other operations and/or functions of modules in the access network device 600 are intended to implement corresponding procedures of the foregoing methods shown in FIG. 2 to FIG. 4. For brevity, details are not described herein again.

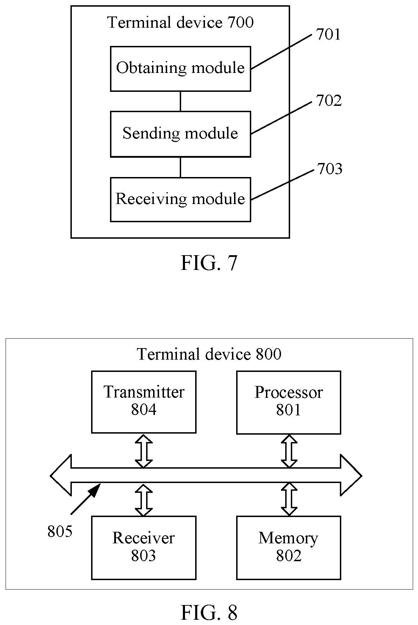

FIG. 7 is a schematic block diagram of a terminal device 700 according to an embodiment of this disclosure. As shown in FIG. 7, the terminal device 700 includes:
an obtaining module 701, configured to obtain a performance parameter value that exists when the terminal device communicates with a first terminal device; and
a sending module 702, configured to send the performance parameter value to the first terminal device.

Optionally, in this embodiment of this disclosure, the terminal device 700 further includes a receiving module 703, configured to receive a request message sent by the first terminal device, where the request message is used to request the terminal device to send the performance parameter value to the first terminal device.

It should be understood that, the terminal device 700 in this embodiment of this disclosure may correspond to the second terminal device in the embodiments of this disclosure, and the foregoing and other operations and/or functions of modules in the terminal device 700 are intended to implement corresponding procedures of the foregoing methods shown in FIG. 2 to FIG. 4. For brevity, details are not described herein again.

FIG. 8 is a schematic structural diagram of a terminal device 800 according to an embodiment of this disclosure. As shown in FIG. 8, the terminal device 800 includes a processor 801, a memory 802, a receiver 803, a transmitter 804, and a bus system 805. The processor 801, the memory 802, the receiver 803, and the transmitter 804 may be connected by using the bus system 805. The memory 802 is configured to store an instruction. The processor 801 is configured to execute the instruction stored in the memory 802, and control the receiver 803 to receive information and control the transmitter 804 to send information.

The processor 801 is configured to obtain a performance parameter value that exists when the terminal device 800 communicates with at least one second terminal device by using a radio link, where the terminal device 800 communicates with an access network device by using a wireless mobile network, and the at least one second terminal device communicates with the terminal device 800 by using a wireless fidelity technology.

The transmitter 804 is configured to report the performance parameter value to the access network device, so that the access network device learns of transmission performance of the radio link.

It should be understood that, the terminal device 800 in this embodiment of this disclosure may correspond to the first terminal device in the embodiments of this disclosure, and the foregoing and other operations and/or functions of modules in the terminal device 800 are intended to implement corresponding procedures of the foregoing methods shown in FIG. 2 to FIG. 4. For brevity, details are not described herein again.

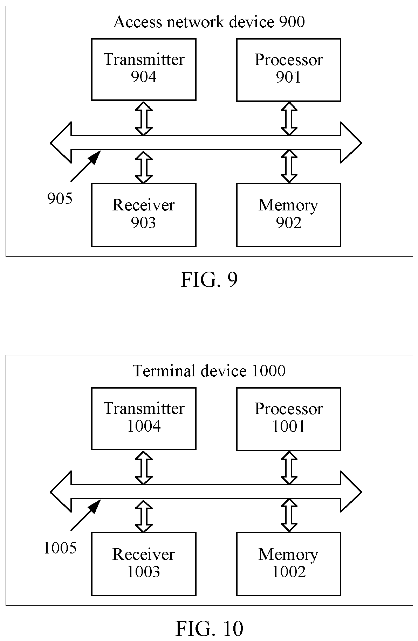

FIG. 9 is a schematic structural diagram of an access network device 900 according to an embodiment of this disclosure. As shown in FIG. 9, the access network device 900 includes a processor 901, a memory 902, a receiver 903, a transmitter 904, and a bus system 905. The processor 901, the memory 902, the receiver 903, and the transmitter 904 may be connected by using the bus system 905. The memory 902 is configured to store an instruction. The processor 901 is configured to execute the instruction stored in the memory 902, and control the receiver 903 to receive information and control the transmitter 904 to send information.

The receiver 903 is configured to receive a performance parameter value that is reported by a first terminal device and that exists when the first terminal device communicates with at least one second terminal device by using a radio link, where the access network device 900 communicates with the first terminal device by using a wireless mobile network, and the first terminal device communicates with the at least one second terminal device by using a wireless fidelity technology.

The processor 901 is configured to schedule the first terminal device based on the performance parameter value.

It should be understood that, the access network device 900 in this embodiment of this disclosure may correspond to the access network 900 in the embodiments of this disclosure, and the foregoing and other operations and/or functions of modules in the access network device 900 are intended to implement corresponding procedures of the foregoing methods shown in FIG. 2 to FIG. 4. For brevity, details are not described herein again.

FIG. 10 is a schematic structural diagram of a terminal device 1000 according to an embodiment of this disclosure. As shown in FIG. 8, the terminal device 1000 includes a processor 1001, a memory 1002, a receiver 1003, a transmitter 1004, and a bus system 1005. The processor 1001, the memory 1002, the receiver 1003, and the transmitter 1004 may be connected by using the bus system 1005. The memory 1002 is configured to store an instruction. The processor 1001 is configured to execute the instruction stored in the memory 1002, and control the receiver 1003 to receive information and control the transmitter 1004 to send information.

The processor 1001 is configured to obtain a performance parameter value that exists when the terminal device communicates with a first terminal device.

The transmitter 1004 is configured to send the performance parameter value to the first terminal device.

It should be understood that, the terminal device 1000 in this embodiment of this disclosure may correspond to the first terminal device in the embodiments of this disclosure, and the foregoing and other operations and/or functions of modules in the terminal device 1000 are intended to implement corresponding procedures of the foregoing methods shown in FIG. 2 to FIG. 4. For brevity, details are not described herein again.

In this embodiment of the present invention, the processor may be a central processing unit (central processing unit, "CPU" for short), a network processor (network processor, "NP" for short), or a combination of a CPU and an NP. The processor may further include a hardware chip. The hardware chip may be an disclosure-specific integrated circuit (disclosure-specific integrated circuit, "ASIC" for short), a programmable logic device (programmable logic device, "PLD" for short), or a combination thereof. The PLD may be a complex programmable logic device (complex programmable logic device, "CPLD" for short), a field programmable gate array (field programmable gate array, "FPGA" for short), a generic array logic (generic array logic, "GAL" for short), or any combination thereof.

The memory may be a volatile memory or a nonvolatile memory, or include both a volatile memory and a nonvolatile memory. The nonvolatile memory may be a read-only memory (Read-Only Memory, "ROM" for short), a programmable read-only memory (Programmable ROM, "PROM" for short), an erasable programmable read-only memory (Erasable PROM, "EPROM" for short), an electrically erasable programmable read-only memory (Electrically EPROM, "EEPROM" for short), or a flash memory. The volatile memory may be a random access memory (Random Access Memory, "RAM" for short), and is used as an external cache.

The bus system may further include a power bus, a control bus, a status signal bus, and the like, in addition to a data bus. For ease of representation, only one thick line is used to represent the bus system in the figure, but this does not mean that there is only one bus or only one type of bus.

An embodiment of this disclosure provides a computer-readable medium configured to store a computer program, and the computer program is configured to perform the communication method in the embodiments of this disclosure in FIG. 2 to FIG. 4. The readable medium may be a ROM or a RAM. This is not limited in this embodiment of this disclosure.

It should be understood that, the terms "and/or" and "at least one of A or B" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular disclosures and design constraint conditions of the technical solutions. A person skilled in the art may use different methods to implement the described functions for each particular disclosure, but it should not be considered that the implementation goes beyond the scope of this disclosure.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this disclosure, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this disclosure essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this disclosure. The foregoing storage medium includes: any medium that can store program code, such as a removable hard disk, a read-only memory, a random access memory, a magnetic disk, or a compact disc.

The foregoing descriptions are merely specific implementations of this disclosure, but are not intended to limit the protection scope of this disclosure.

## Claims

1. A wireless communication method, comprising:
obtaining (201), by a first terminal device, a performance parameter value of a radio link that exists when the first terminal device communicates with at least one second terminal device by using the radio link, wherein the first terminal device communicates with an access network device by using a wireless cellular mobile network, and the at least one second terminal device communicates with the first terminal device by using a wireless fidelity, Wi-Fi, technology, wherein the first terminal device provides a network access service for the at least one second terminal device; and
reporting (202), by the first terminal device, the performance parameter value to the access network device, so that the access network device learns of transmission performance of the radio link.

2. The method according to claim 1, wherein the performance parameter value comprises a system performance parameter value that exists when the first terminal device communicates with a device system comprising the at least one second terminal device by using the radio link.

3. The method according to claim 1, wherein the performance parameter value comprises a performance parameter value that corresponds to each second terminal device when the first terminal device communicates with each second terminal device of the at least one second terminal device by using the radio link.

4. The method according to claim 3, wherein the reporting, by the first terminal device, the performance parameter value to the access network device comprises:
reporting, by the first terminal device to the access network device, identifier information of each second terminal device and the performance parameter value corresponding to each second terminal device.

5. The method according to claim 4, wherein before the reporting, by the first terminal device to the access network device, identifier information of each second terminal device and the performance parameter value corresponding to each second terminal device, the method further comprises:
sending, by the first terminal device, address information of each second terminal device to the access network device; and
receiving, by the first terminal device, the identifier information of each second terminal device that is sent by the access network device, wherein the identifier information of each second terminal device is identifier information that is allocated by the access network device to each second terminal device based on the address information of each second terminal device.

6. The method according to any one of claims 1 to 5, wherein the reporting, by the first terminal device, the performance parameter value to the access network device comprises:
reporting, by the first terminal device, the performance parameter value to the access network device in a preset period.

7. The method according to any one of claims 1 to 6, wherein the reporting, by the first terminal device, the performance parameter value to the access network device comprises:
reporting, by the first terminal device, the performance parameter value to the access network device when determining that the performance parameter value and a preset threshold satisfy a preset relationship.

8. The method according to any one of claims 1 to 7, wherein the method further comprises:
receiving, by the first terminal device, a first indication message sent by the access network device, wherein the first indication message is used to indicate at least one of the following information: a to-be-measured performance parameter value, a reporting manner, and an identifier of the at least one second terminal device required for obtaining the performance parameter value.

9. The method according to any one of claims 1 to 8, wherein the method further comprises:
sending, by the first terminal device, a second indication message to the access network device, wherein the second indication message is used to indicate that the first terminal device has a capability of providing a wireless fidelity network access service.

10. The method according to any one of claims 1 to 9, wherein the performance parameter comprises at least one of a throughput rate, a packet loss rate, a retransmission rate, channel utilization, and a receive signal strength.

11. A wireless communication method, comprising:
receiving (203), by an access network device, a performance parameter value of a radio link that is reported by a first terminal device and that exists when the first terminal device communicates with at least one second terminal device by using the radio link, wherein the access network device communicates with the first terminal device by using a wireless cellular mobile network, and the first terminal device communicates with the at least one second terminal device by using a wireless fidelity, Wi-Fi, technology, wherein the first terminal device provides a network access service for the at least one second terminal device; and
scheduling (204), by the access network device, the first terminal device based on the performance parameter value.

12. The method according to claim 11, wherein the performance parameter value comprises a system performance parameter value that exists when the first terminal device communicates with a device system comprising the at least one second terminal device by using the radio link.

13. The method according to claim 11, wherein the performance parameter value comprises a performance parameter value that corresponds to each second terminal device when the first terminal device communicates with each second terminal device of the at least one second terminal device by using the radio link.

14. A first terminal device, configured to perform the method of any one of claims 1 to 10.

15. An access network device, configured to perform the method of any one of claims 11 to 13.

## Patentansprüche

1. Drahtloses Kommunikationsverfahren, das Folgendes umfasst:
eine erste Endgerätevorrichtung erhält (201) einen Leistungsfähigkeitsparameterwert einer Funkstrecke, der existiert, wenn die erste Endgerätevorrichtung durch Verwendung der Funkstrecke mit mindestens einer zweiten Endgerätevorrichtung kommuniziert, wobei die erste Endgerätevorrichtung durch Verwendung eines drahtlosen Mobilfunknetzes mit einer Zugangsnetzvorrichtung kommuniziert und die mindestens eine zweite Endgerätevorrichtung durch Verwendung einer "Wireless Fidelity"- bzw. WiFi-Technologie mit der ersten Endgerätevorrichtung kommuniziert, wobei die erste Endgerätevorrichtung einen Netzzugangsdienst für die mindestens eine zweite Endgerätevorrichtung bereitstellt; und
die erste Endgerätevorrichtung meldet (202) den Leistungsfähigkeitsparameterwert an die Zugangsnetzvorrichtung, so dass die Zugangsnetzvorrichtung über Übertragungsleistungsfähigkeit der Funkstrecke erfährt.

2. Verfahren nach Anspruch 1, wobei der Leistungsfähigkeitsparameterwert einen Systemleistungsfähigkeits-Parameterwert umfasst, der existiert, wenn die erste Endgerätevorrichtung durch Verwendung der Funkstrecke mit einem Vorrichtungssystem kommuniziert, das die mindestens eine zweite Endgerätevorrichtung umfasst.

3. Verfahren nach Anspruch 1, wobei der Leistungsfähigkeitsparameterwert einen Leistungsfähigkeitsparameterwert umfasst, der jeder zweiten Endgerätevorrichtung entspricht, wenn die erste Endgerätevorrichtung durch Verwendung der Funkstrecke mit jeder zweiten Endgerätevorrichtung der mindestens einen zweiten Endgerätevorrichtung kommuniziert.

4. Verfahren nach Anspruch 3, wobei das Melden des Leistungsfähigkeitsparameterwerts an die Zugangsnetzvorrichtung durch die erste Endgerätevorrichtung Folgendes umfasst:
die erste Endgerätevorrichtung meldet der Zugangsnetzvorrichtung Kennungsinformationen jeder zweiten Endgerätevorrichtung und den jeder zweiten Endgerätevorrichtung entsprechenden Leistungsfähigkeitsparameterwert.

5. Verfahren nach Anspruch 4, wobei das Verfahren vor dem Melden von Kennungsinformationen jeder zweiten Endgerätevorrichtung und des jeder zweiten Endgerätevorrichtung entsprechenden Leistungsfähigkeitsparameterwerts an die Zugangsnetzvorrichtung durch die erste Endgerätevorrichtung ferner Folgendes umfasst:
die erste Endgerätevorrichtung sendet Adresseninformationen jeder zweiten Endgerätevorrichtung zu der Zugangsnetzvorrichtung; und
die erste Endgerätevorrichtung empfängt die Kennungsinformationen jeder zweiten Endgerätevorrichtung, die durch die Zugangsnetzvorrichtung gesendet werden, wobei die Kennungsinformationen jeder zweiten Endgerätevorrichtung Kennungsinformationen sind, die durch die Zugangsnetzvorrichtung auf der Basis der Adresseninformationen jeder zweiten Endgerätevorrichtung jeder zweiten Endgerätevorrichtung zugeteilt werden.

6. Verfahren nach einem der Ansprüche 1 bis 5, wobei das Melden des Leistungsfähigkeitsparameterwerts an die Zugangsnetzvorrichtung durch die erste Endgerätevorrichtung Folgendes umfasst:
die erste Endgerätevorrichtung meldet der Zugangsnetzvorrichtung den Leistungsfähigkeitsparameterwert in einem voreingestellten Zeitraum.

7. Verfahren nach einem der Ansprüche 1 bis 6, wobei das Melden des Leistungsfähigkeitsparameterwerts an die Zugangsnetzvorrichtung durch die erste Endgerätevorrichtung Folgendes umfasst:
die erste Endgerätevorrichtung meldet der Zugangsnetzvorrichtung den Leistungsfähigkeitsparameterwert, wenn bestimmt wird, dass der Leistungsfähigkeitsparameterwert und eine voreingestellte Schwelle eine voreingestellte Beziehung erfüllen.

8. Verfahren nach einem der Ansprüche 1 bis 7, wobei das Verfahren ferner Folgendes umfasst:
die erste Endgerätevorrichtung empfängt eine durch die Zugangsnetzvorrichtung gesendete erste Angabenachricht, wobei die erste Angabenachricht benutzt wird, um mindestens eine der folgenden Informationen anzugeben: einen zu messenden Leistungsfähigkeitsparameterwert, eine Meldeweise und eine Kennung der mindestens einen zweiten Endgerätevorrichtung, die zum Erhalten des Leistungsfähigkeitsparameterwerts erforderlich ist.

9. Verfahren nach einem der Ansprüche 1 bis 8, wobei das Verfahren ferner Folgendes umfasst:
die erste Endgerätevorrichtung sendet eine zweite Angabenachricht zu der Zugangsnetzvorrichtung, wobei die zweite Angabenachricht benutzt wird, um anzugeben, dass die erste Endgerätevorrichtung eine Fähigkeit aufweist, einen "Wireless Fidelity"-Netzzugangsdienst bereitzustellen.

10. Verfahren nach einem der Ansprüche 1 bis 9, wobei der Leistungsfähigkeitsparameter mindestens einen der folgenden umfasst: eine Durchsatzrate, eine Paketverlustrate, eine Neuübertragungsrate, Kanalauslastung und eine Empfangssignalstärke.

11. Drahtloses Kommunikationsverfahren, das Folgendes umfasst:
eine Zugangsnetzvorrichtung empfängt (203) einen Leistungsfähigkeitsparameterwert einer Funkstrecke, der durch eine erste Endgerätevorrichtung gemeldet wird und der existiert, wenn die erste Endgerätevorrichtung durch Verwendung der Funkstrecke mit mindestens einer zweiten Endgerätevorrichtung kommuniziert, wobei die Zugangsnetzvorrichtung durch Verwendung eines drahtlosen Mobilfunknetzes mit der ersten Endgerätevorrichtung kommuniziert und die erste Endgerätevorrichtung durch Verwendung einer "Wireless Fidelity"- bzw. WiFi-Technologie mit der mindestens einen zweiten Endgerätevorrichtung kommuniziert, wobei die erste Endgerätevorrichtung einen Netzzugangsdienst für die mindestens eine zweite Endgerätevorrichtung bereitstellt; und
die Zugangsnetzvorrichtung teilt die erste Endgerätevorrichtung auf der Basis des Leistungsfähigkeitsparameterwerts ein (204).

12. Verfahren nach Anspruch 11, wobei der Leistungsfähigkeitsparameterwert einen Systemleistungsfähigkeits-Parameterwert umfasst, der existiert, wenn die erste Endgerätevorrichtung durch Verwendung der Funkstrecke mit einem Vorrichtungssystem kommuniziert, das die mindestens eine zweite Endgerätevorrichtung umfasst.

13. Verfahren nach Anspruch 11, wobei der Leistungsfähigkeitsparameterwert einen Leistungsfähigkeitsparameterwert umfasst, der jeder zweiten Endgerätevorrichtung entspricht, wenn die erste Endgerätevorrichtung durch Verwendung der Funkstrecke mit jeder zweiten Endgerätevorrichtung der mindestens einen zweiten Endgerätevorrichtung kommuniziert.

14. Erste Endgerätevorrichtung, die dafür ausgelegt ist, das Verfahren nach einem der Ansprüche 1 bis 10 auszuführen.

15. Zugangsnetzvorrichtung, die dafür ausgelegt ist, das Verfahren nach einem der Ansprüche 11 bis 13 auszuführen.

## Revendications

1. Procédé de communication sans fil, comprenant de :
obtenir (201), par un premier dispositif terminal, une valeur de paramètre de performance d'une liaison radio qui existe lorsque le premier dispositif terminal communique avec au moins un deuxième dispositif terminal en utilisant la liaison radio, dans lequel le premier dispositif terminal communique avec un dispositif de réseau d'accès en utilisant un réseau mobile cellulaire sans fil, et le au moins un deuxième dispositif terminal communique avec le premier dispositif terminal en utilisant une technologie fidélité sans fil, Wi-Fi, dans lequel le premier dispositif terminal fournit un service d'accès au réseau pour le au moins un deuxième dispositif terminal ; et
signaler (202), par le premier dispositif terminal, la valeur du paramètre de performance au dispositif de réseau d'accès, de sorte que le dispositif de réseau d'accès apprend la performance de transmission de la liaison radio.

2. Procédé selon la revendication 1, dans lequel la valeur du paramètre de performance comprend une valeur de paramètre de performance de système qui existe lorsque le premier dispositif terminal communique avec un système de dispositif comprenant le au moins un deuxième dispositif terminal en utilisant la liaison radio.

3. Procédé selon la revendication 1, dans lequel la valeur de paramètre de performance comprend une valeur de paramètre de performance correspondant à chaque deuxième dispositif terminal lorsque le premier dispositif terminal communique avec chaque deuxième dispositif terminal dudit au moins un deuxième dispositif terminal en utilisant la liaison radio.

4. Procédé selon la revendication 3, dans lequel la signalisation, par le premier dispositif terminal, de la valeur de paramètre de performance au dispositif de réseau d'accès comprend de :
signaler, par le premier dispositif terminal au dispositif de réseau d'accès, des informations d'identification de chaque deuxième dispositif terminal et la valeur de paramètre de performance correspondant à chaque deuxième dispositif terminal.

5. Procédé selon la revendication 4, dans lequel, avant la signalisation, par le premier dispositif terminal au dispositif de réseau d'accès, des informations d'identification de chaque deuxième dispositif terminal et de la valeur de paramètre de performance correspondant à chaque deuxième dispositif terminal, le procédé comprend en outre de :
envoyer, par le premier dispositif terminal, des informations d'adresse de chaque deuxième dispositif terminal au dispositif de réseau d'accès ; et
recevoir, par le premier dispositif terminal, les informations d'identification de chaque deuxième dispositif terminal qui sont envoyées par le dispositif de réseau d'accès, dans lequel les informations d'identification de chaque deuxième dispositif terminal sont des informations d'identification qui sont attribuées par le dispositif de réseau d'accès à chaque deuxième dispositif terminal sur la base des informations d'adresse de chaque deuxième dispositif terminal.

6. Procédé selon l'une quelconque des revendications 1 à 5, dans lequel la signalisation, par le premier dispositif terminal, de la valeur de paramètre de performance au dispositif de réseau d'accès comprend de :
signaler, par le premier dispositif terminal, la valeur de paramètre de performance au dispositif de réseau d'accès dans une période prédéfinie.

7. Procédé selon l'une quelconque des revendications 1 à 6, dans lequel la signalisation, par le premier dispositif terminal, de la valeur de paramètre de performance au dispositif de réseau d'accès comprend de :
signaler, par le premier dispositif terminal, la valeur de paramètre de performance au dispositif de réseau d'accès lorsqu'il est déterminé que la valeur de paramètre de performance et un seuil prédéfini satisfont une relation prédéfinie.

8. Procédé selon l'une quelconque des revendications 1 à 7, dans lequel le procédé comprend en outre de :
recevoir, par le premier dispositif terminal, un premier message d'indication envoyé par le dispositif de réseau d'accès, dans lequel le premier message d'indication est utilisé pour indiquer au moins l'une des informations suivantes : une valeur de paramètre performance à mesurer, une manière de signaler, et un identifiant du au moins un deuxième dispositif terminal requis pour obtenir la valeur de paramètre de performance.

9. Procédé selon l'une quelconque des revendications 1 à 8, dans lequel le procédé comprend en outre de :
envoyer, par le premier dispositif terminal, un deuxième message d'indication au dispositif de réseau d'accès, dans lequel le deuxième message d'indication est utilisé pour indiquer que le premier dispositif terminal a une capacité de fournir un service d'accès au réseau à fidélité sans fil.

10. Procédé selon l'une quelconque des revendications 1 à 9, dans lequel le paramètre de performance comprend au moins l'un d'un débit, d'un taux de perte de paquets, d'un taux de retransmission, d'une utilisation de canal, et d'une force du signal de réception.

11. Procédé de communication sans fil, comprenant de :
recevoir (203), par un dispositif de réseau d'accès, une valeur de paramètre de performance d'une liaison radio qui est signalée par un premier dispositif terminal et qui existe lorsque le premier dispositif terminal communique avec au moins un deuxième dispositif terminal en utilisant la liaison radio, dans lequel le dispositif de réseau d'accès communique avec le premier dispositif terminal en utilisant un réseau de téléphonie mobile cellulaire sans fil, et le premier dispositif terminal communique avec le au moins un deuxième dispositif terminal en utilisant une technologie de fidélité sans fil, Wi-Fi, dans lequel le premier dispositif terminal fournit un service d'accès au réseau pour le au moins un deuxième dispositif terminal ; et
planifier (204), par le dispositif de réseau d'accès, le premier dispositif terminal sur la base de valeur de paramètre de performance.

12. Procédé selon la revendication 11, dans lequel la valeur du paramètre de performance comprend une valeur de paramètre de performance de système qui existe lorsque le premier dispositif terminal communique avec un système de dispositif comprenant le au moins un deuxième dispositif terminal en utilisant la liaison radio.

13. Procédé selon la revendication 11, dans lequel la valeur de paramètre de performance comprend une valeur de paramètre de performance correspondant à chaque deuxième dispositif terminal lorsque le premier dispositif terminal communique avec chaque deuxième dispositif terminal dudit au moins un deuxième dispositif terminal en utilisant la liaison radio.

14. Premier dispositif terminal, configuré pour exécuter le procédé selon l'une quelconque des revendications 1 à 10.

15. Dispositif de réseau d'accès, configuré pour exécuter le procédé selon l'une quelconque des revendications 11 à 13.
